# EUROPEAN PATENT SPECIFICATION

(11) **EP 1 454 778 B1**
(45) Date of publication and mention of the grant of the patent: **12.12.2007**
(21) Application number: 04100915.0
(22) Date of filing: 05.03.2004
(51) Int. Cl.: B60H 1/00

(54) **Vehicle passenger compartment air conditioning system and relative air conditioning panel**
Kraftfahrzeug- Innenraumklimaanlage und Klimaanlagewand
Climatisateur pour habitacle de véhicule et panneau de conditionnement d'air

(30) Priority: 07.03.2003 IT TO20030175
(43) Date of publication of application: 08.09.2004
(73) Proprietor: C.R.F. SOCIETA' CONSORTILE PER AZIONI, 10043 Orbassano (Torino) (IT)
(72) Inventor: Cisterino, Maurizio, 10043 Orbassano (IT); Mattiello, Fabrizio, 10043 Orbassano (IT); Magnetto, Daniela, 10043 Orbassano (IT); Malvicino, Carloandrea, 10043 Orbassano (IT)
(74) Representative: Jorio, Paolo

(56) References cited:
- DE-A1- 4 210 885
- DE-U1- 8 420 082
- NL-C2- 1 009 676
- US-A- 6 035 654

## Description

The present invention relates to a vehicle passenger compartment air conditioning system, and relative air conditioning panel.

The air conditioning system according to the invention is particularly suitable for industrial vehicle cabs, but may also be used in other types of vehicles, such as passenger cars, campers, rail cars, agricultural machines, etc.

As is known, the cab of long-distance industrial vehicles is also used as overnight sleeping accommodation, is equipped with one or more bunks, and is normally heated by a heat exchanger fed with the mixture in the engine cooling circuit. The vehicle is also equipped with an auxiliary fuel-fired burner for heating the mixture in the engine cooling circuit. Whichever the case, the cab is heated by the hot air circulating in the heat exchanger, which is fed into the cab through inlets on the instrument panel by a normally variable-speed fan.

The above heating system has several drawbacks. In particular, feeding in hot air by means of a fan creates discomfort, both on account of the noise of the fan and the concentrated airflow produced. Moreover, since the bunk is located next to the rear wall of the cab, the cab can only be adequately heated during overnight stops in cold climates by running the fan at maximum speed, the noise of which prevents sound sleep.

At any rate, the seats prevent the hot air from the inlets on the instrument panel from flowing evenly over the bunk; and the occupant of the bunk is subjected to widely differing temperatures : the hot airflow from the front of the cab on one side of the body, and the cold rear wall on the other. As a result, sleep is invariably restless, thus impairing driving efficiency and endangering the safety of the driver.

Passenger car air conditioning systems are also known in which additional hot-air inlets are provided, in particular in the side panels of the vehicle and over individual seats. In this case too, however, hot air is blown into the passenger compartment by fans, thus resulting in substantially the same drawbacks as for industrial vehicles.

From document DE 84 20 082, it is known a panel for an air conditioning system of a passengers' compartment, where the panel is provided with a number of parallel tubes communicating with a fluid feed pipe and with a fluid drain pipe. The pipes are in communication with a central heat exchanger, which is fed by the water of the engine cooling circuit. The panel is merely formed of a pair of corrugated plates which are fixed to each other to form the tubes and the pipes of the panel. Such a panel is rather unsatisfactory for air conditioning the vehicle compartment.

It is an object of the invention to provide a vehicle passenger compartment air conditioning system designed to eliminate the drawbacks of known air conditioning systems, and which provides for a highly comfortable, noise-free microclimate.

According to the present invention, there is provided an air conditioning system for conditioning the passenger compartment of a vehicle having at least one partition wall separating off the surrounding environment, said wall being covered with at least one air conditioning panel including a heat exchanger for exchanging heat between a fluid circulating in an air conditioning circuit and the air in the passenger compartment; said circuit comprising a feed pipe and a drain pipe for said fluid; said panel comprising a number of substantially coplanar capillary tubes being parallel to one another, and communicating with said feed pipe by means of a distribution pipe for said fluid, and with said drain pipe by means of a conducting pipe for said fluid; said vehicle comprising an engine cooling circuit, said feed pipe and said drain pipe being connected to the heat exchanger fed by said engine cooling circuit; characterized in that the said panel comprises a thermal insulating layer separated from said capillary tubes by a gap, said panel also having a layer of sweat fabric on the opposite side to said gap; said thermal insulating layer having fastening means for assembly to said wall.

A preferred, non-limiting embodiment of the invention will be described by way of example with reference to the accompanying drawings, in which:
Figure 1 shows a partly sectioned view in perspective of an industrial vehicle cab incorporating an air conditioning system in accordance with the invention;
Figure 2 shows a view in perspective, from another viewpoint, of part of the Figure 1 cab;
Figure 3 shows a panel of the Figure 1 air conditioning system;
Figure 4 shows a larger-scale vertical section of a portion of Figure 3.

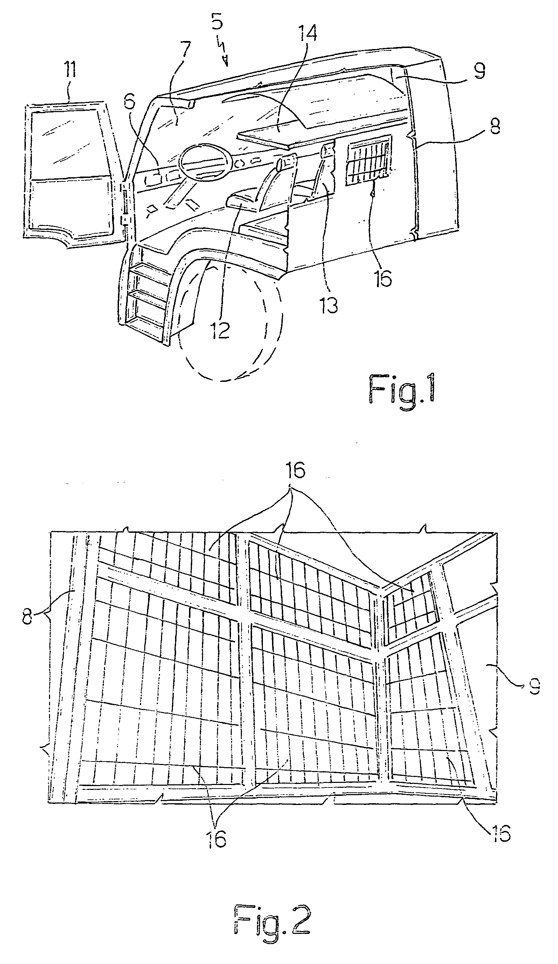

With reference to Figure 1, number 5 indicates as a whole a cab, or passenger compartment, of an industrial vehicle, e.g. a trailer tractor. Cab 5 is equipped at the front with an instrument panel 6 beneath a windscreen 7, has a rear wall 8 fixed to two side panels 9, each having a door 11, and is equipped inside with a driver's seat 12, and a second seat 13 which may be used by the driver during short stops, or by a co-driver on the road.

A bunk 14 is normally provided at the rear of cab 5, is fixed to rear wall 8, between two portions of the two side panels 9, and is used by the driver during long, normally overnight, stops. In the case of two drivers working alternate shifts at the wheel, bunk 14 may also be used in shifts, even on the road.

In the known technique, in which the cab is air conditioned by blowing in conditioned air by means of a fan, i.e. by forced convection, the fan is operated at various speeds, and therefore at various noise levels, to adapt the air conditioning to the difference in temperature between the inside of the cab and the outside atmosphere. Moreover, since bunk 14 in cab 5 is located adjacent to rear wall 8, the occupant of the bunk is subjected to widely differing temperatures on the part of the body facing wall 8, and the part facing inwards of cab 5.

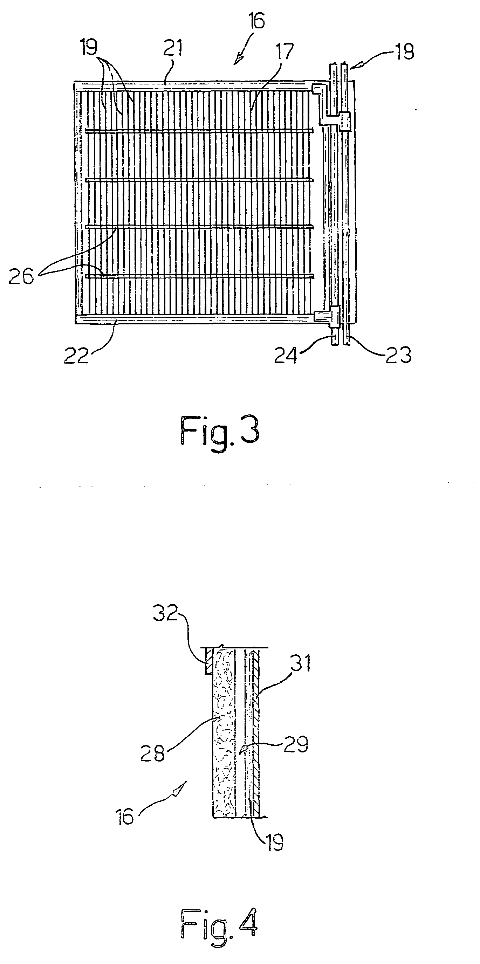

To eliminate the above drawbacks, according to the invention, at least wall 8 is covered with at least one air conditioning panel 16 comprising a heat exchanger indicated as a whole by 17 (Figure 3) and which provides for heat exchange between a fluid circulating in a circuit 18, and the air inside cab 5. More specifically, wall 8 (Figure 2) is covered with a number of appropriately shaped panels 16, which may be designed in the form of standard modules, and may be fixed to wall 8 individually or in combinations.

To heat cab 5, part of the engine cooling liquid, normally a mixture of water and glycol, is fed into circuit 18 (Figure 3) and then into the heat exchanger in the instrument panel of the vehicle.

When the vehicle is stationary, the part of the liquid flowing in the heat exchanger in the instrument panel may be heated by a normal auxiliary burner, and, in the case of high ambient temperatures, may be cooled by a cooling assembly.

Heat exchanger 17 of each panel 16 comprises a number of small-diameter, substantially coplanar, parallel tubes 19 - hereinafter referred to as capillary tubes - which communicate on one side with a distribution pipe 21 supplying the liquid, and on the other side with a conducting pipe 22 for recycling or draining the liquid. Capillary tubes 19 and/or pipes 21 and 22 may advantageously be made of plastic material, such as polyethylene.

Distribution pipe 21 and conducting pipe 22 are connected in known manner to a feed pipe 23 and a drain pipe 24 of circuit 18 respectively; and capillary tubes 19 of heat exchanger 17 may be fixed to a number of reinforcing bars 26.

Each panel 16 also comprises a layer of thermal insulating material 28 (Figure 4) which is bracketed to rear wall 8 and defines, together with capillary tubes 19 of heat exchanger 17, a gap 29 for improved heat exchange. Panel 16 also comprises a layer of sweat fabric 31 fixed contacting capillary tubes 19 on the opposite side to gap 29.

Panel 16 also comprises fastening means, e.g. brackets 32, for assembly to rear wall 8 of cab 5. Insulating layer 28 of panel 16 is placed adjacent to wall 8 of cab 5, and the layer of sweat fabric 31 is positioned inwards of the cab, and so forms part of the upholstery of cab 5.

The air conditioning system also comprises an optional auxiliary pump for circulating the water and glycol mixture in circuit 18; one or more solenoid valves connecting circuit 18 to the normal engine cooling circuit; and an electronic central control unit for controlling the auxiliary pump (if any) and the valves according to the desired temperature.

In actual use, the electronic central control unit circulates the appropriately heated or cooled mixture in circuit 18; and, as the mixture flows inside capillary tubes 19, heat exchange takes place between the mixture and the air in the cab. By means of panels 16, cab 5 is therefore conditioned partly by radiation and partly by natural air convection, as opposed to forced convection, thus ensuring maximum well-being of the occupants.

The advantages, as compared with known systems, of the air conditioning system according to the invention will be clear from the foregoing description. In particular, the system according to the invention is extremely quiet, by involving no fans or air jets; the occupant of the cab, especially when lying on bunk 14 adjacent to wall 8, is no longer subjected to widely differing temperatures; the air conditioning system can be supplied easily by standard auxiliary heat generators and coolers of conventional vehicles; and panels 16 also replace the usual insulation and upholstery of the walls of cab 5.

The air conditioning system according to the invention may also be applied to other types of vehicles. Panels 16, for example, may be applied to any type of passenger vehicle. In the case of buses, panels 16 may be applied to the side panels, thus eliminating the usual air ducts alongside the windows, and the usual inlets over individual seats, which must normally be oriented and/or closed by hand.

The air conditioning system according to the invention may also be used in passenger rail cars. In particular, panels 16 may be fitted to the walls of the end carriages of sleeping-cars. In particularly cold climates, the air conditioning system according to the invention may even be used in the cab of an agricultural, earthmoving, or lifting machine (crane), etc., by fitting panels 16 preferably to the rear wall of the cab.

Clearly, changes may be made to the air conditioning system as described herein without, however, departing from the scope of the accompanying Claims. For example, panels 16 may be shaped, in terms of both contour and surface curvature, to adapt to the wall portion to which they are to be fitted; and changes may also be made to the fastening means of panels 16 and/or to the means for controlling circulation of the liquid mixture in heat exchangers 17.

## Claims

1. An air conditioning system for conditioning the passenger compartment of a vehicle having at least one partition wall (8, 9) separating off the surrounding environment, said wall (8, 9) being covered with at least one air conditioning panel (16) including a heat exchanger (17) for exchanging heat between a fluid circulating in an air conditioning circuit (18) and the air in the passenger compartment; said circuit (18) comprising a feed pipe (23) and a drain pipe (24) for said fluid; said panel (16) comprising a number of substantially coplanar capillary tubes (19) being parallel to one another, and communicating with said feed pipe (23) by means of a distribution pipe (21) for said fluid, and with said drain pipe (24) by means of a conducting pipe (22) for said fluid; said vehicle comprising an engine cooling circuit, said feed pipe (23) and said drain pipe (24) being connected to the heat exchanger fed by said engine cooling circuit; **characterized in that** the said panel (16) comprises a thermal insulating layer (28) separated from said capillary tubes (19) by a gap (29) said panel (16) also having a layer of sweat fabric (31) on the opposite side to said gap (29); said thermal insulating layer (28) having fastening means (32) for assembly to said wall (8, 9).

2. A system as claimed in Claim 1, **characterized in that** said fluid is a mixture of water and glycol.

3. A system as claimed in Claim 1 or 2, **characterized in that** said capillary tubes (19) and/or said distribution pipe (21) and said conducting pipe (22) are made of plastic material, such as polyethylene.

4. A system as claimed in any one of the foregoing Claims, **characterized in that** said feed pipe (23) and said drain pipe (24) are also connected selectively to a cooler.

5. A system as claimed in Claim 4, **characterized in that** selective connection of said feed pipe (23) and of said drain pipe (24) is controlled by an electronic circuit.

6. A system as claimed in any one of the foregoing Claims, **characterized in that** said wall (8, 9) is covered with a number of modular panels (16) fixed to said wall (8) in a given combination.

7. A system as claimed in any one of the foregoing Claims, **characterized in that** said vehicle is an industrial vehicle; said wall being a rear wall (8) of the passenger compartment.

8. A system as claimed in any one of Claims 1 to 6, **characterized in that** said vehicle is a passenger vehicle; said wall being at least one of the side walls (9) of the vehicle.

9. A system as claimed in any one of Claims 1 to 6, **characterized in that** said vehicle is a rail car, and said passenger compartment is a passenger carriage; said wall (8, 9) being one of the walls of said carriage.

10. A system as claimed in any one of Claims 1 to 6, **characterized in that** said vehicle is an agricultural machine, or an earthmoving machine, or a lifting machine; said wall being the rear wall (8) of the cab.

## Patentansprüche

1. Klimaanlage zur Klimatisierung des Fahrgastraumes eines Fahrzeuges mit wenigstens einer Trennwand (8, 9), welche die umliegende Umgebung abtrennt, wobei die Wand (8, 9) mit wenigstens einem Klimatisierungspaneel (16) abgedeckt ist, das einen Wärmetauscher (17) zum Austauschen von Wärme zwischen einem in einem Klimatisierungskreislauf (18) zirkulierenden Fluid und der Luft in dem Fahrgastraum aufweist; wobei der Kreislauf (18) eine Zuführleitung (23) und eine Abflussleitung (24) für das Fluid aufweist; wobei das Paneel (16) eine Anzahl von im Wesentlichen koplanaren Kapillarrohren (19) aufweist, die parallel zueinander sind, und über eine Verteilerleitung (21) für das Fluid mit der Zuführleitung (23) und über eine Abführleitung (22) für das Fluid mit der Abflussleitung (24) kommuniziert; wobei das Fahrzeug einen Motorkühlkreislauf aufweist, wobei die Zuführleitung (23) und die Abflussleitung (24) mit dem Wärmetauscher verbunden sind, der von dem Motorkühlkreislauf versorgt wird; **dadurch gekennzeichnet, dass** das Paneel (16) eine wärmeisolierende Schicht (28) aufweist, die über einen Spalt (29) von den Kapillarrohren (19) getrennt ist, wobei das Paneel (16) an der dem Spalt (29) gegenüberliegenden Seite auch eine Schicht aus Transpirationsgewebe (31) aufweist; wobei die wärmeisolierende Schicht (28) Befestigungsmittel (32) zur Montage an der Wand (8, 9) aufweist.

2. Anlage nach Anspruch 1, **dadurch gekennzeichnet, dass** das Fluid ein Gemisch aus Wasser und Glykol ist.

3. Anlage nach Anspruch 1 oder 2, **dadurch gekennzeichnet, dass** die Kapillarrohre (19) und/oder die Verteilerleitung (21) und die Abführleitung (22) aus Kunststoffmaterial, wie Polyethylen, hergestellt sind.

4. Anlage nach einem der vorhergehenden Ansprüche, **dadurch gekennzeichnet, dass** die Zuführleitung (23) und die Abflussleitung (24) wahlweise auch mit einem Kühler verbunden sind.

5. Anlage nach Anspruch 4, **dadurch gekennzeichnet, dass** die wahlweise Verbindung der Zuführleitung (23) und der Abflussleitung (24) von einer elektronischen Schaltung gesteuert wird.

6. Anlage nach einem der vorhergehenden Ansprüche, **dadurch gekennzeichnet, dass** die Wand (8, 9) mit einer Anzahl von modularen Paneelen (16) abgedeckt ist, die in einer vorgegebenen Kombination an der Wand (8) befestigt sind.

7. Anlage nach einem der vorhergehenden Ansprüche, **dadurch gekennzeichnet, dass** das Fahrzeug ein Industriefahrzeug ist; wobei die Wand eine Rückwand (8) des Fahrgastraumes ist.

8. Anlage nach einem der Ansprüche 1 bis 6, **dadurch gekennzeichnet, dass** das Fahrzeug ein Personenkraftwagen ist; wobei die Wand wenigstens eine der Seitenwände (9) des Fahrzeuges ist.

9. Anlage nach einem der Ansprüche 1 bis 6, **dadurch gekennzeichnet, dass** das Fahrzeug ein Schienenfahrzeug ist und der Fahrgastraum ein Reisewaggon ist; wobei die Wand (8, 9) eine der Wände des Waggons ist.

10. Anlage nach einem der Ansprüche 1 bis 6, **dadurch gekennzeichnet, dass** das Fahrzeug eine Landmaschine oder eine Erdbaumaschine oder eine Hebemaschine ist; wobei die Wand die Rückwand (8) des Fahrerhauses ist.

## Revendications

1. Climatisation destinée à climatiser l'habitacle d'un véhicule possédant au moins une paroi de séparation (8, 9) séparant de l'environnement avoisinant, ladite paroi (8, 9) étant recouverte d'au moins un panneau de climatisation (16) comportant un échangeur thermique (17) destiné à transférer la chaleur entre un fluide circulant dans un circuit de climatisation (18) et l'air dans l'habitacle ; ledit circuit (18) comprenant un tuyau d'alimentation (23) et un tuyau d'évacuation (24) pour ledit fluide ; ledit panneau (16) comprenant un certain nombre de tubes capillaires sensiblement coplanaires (19) étant parallèles les uns aux autres, et communiquant avec ledit tuyau d'alimentation (23) au moyen d'un tuyau de distribution (21) pour ledit fluide, et avec ledit tuyau d'évacuation (24) au moyen d'un tuyau de conduite (22) pour ledit fluide ; ledit véhicule comprenant un circuit de refroidissement du moteur, ledit tuyau d'alimentation (23) et ledit tuyau d'évacuation (24) étant connectés à l'échangeur thermique alimenté par ledit circuit de refroidissement du moteur ; **caractérisée en ce que** ledit panneau (16) comprend une couche d'isolation thermique (28) séparée desdits tubes capillaires (19) par un espace (29), ledit panneau (16) possédant également une couche de tissu absorbant (31) sur le côté en regard dudit espace (29) ; ladite couche d'isolation thermique (28) possédant un moyen d'attache (32) pour l'assemblage à ladite paroi (8, 9).

2. Climatisation selon la revendication 1, **caractérisée en ce que** ledit fluide est un mélange d'eau et de glycol.

3. Climatisation selon la revendication 1 ou 2, **caractérisée en ce que** lesdits tubes capillaires (19) et/ou ledit tuyau de distribution (21) et ledit tuyau de conduite (22) sont constitués de matériau plastique, tel que du polyéthylène.

4. Climatisation selon l'une quelconque des revendications précédentes, **caractérisée en ce que** ledit tuyau d'alimentation (23) et ledit tuyau d'évacuation (24) sont également connectés sélectivement à un refroidisseur.

5. Climatisation selon la revendication 4, **caractérisée en ce que** la connexion sélective dudit tuyau d'alimentation (23) et dudit tuyau d'évacuation (24) est commandée par un circuit électronique.

6. Climatisation selon l'une quelconque des revendications précédentes, **caractérisée en ce que** ladite paroi (8, 9) est recouverte d'un certain nombre de panneaux modulaires (16) fixés à ladite paroi (8) dans une combinaison donnée.

7. Climatisation selon l'une quelconque des revendications précédentes, **caractérisée en ce que** ledit véhicule est un véhicule industriel ; ladite paroi étant une paroi arrière (8) de l'habitacle.

8. Climatisation selon l'une quelconque des revendications 1 à 6, **caractérisée en ce que** ledit véhicule est un véhicule de tourisme ; ladite paroi étant au moins l'une des parois latérales (9) du véhicule.

9. Climatisation selon l'une quelconque des revendications 1 à 6, **caractérisée en ce que** ledit véhicule est un véhicule sur rail, et ledit habitacle est une voiture à voyageurs ; ladite paroi (8, 9) étant l'une des parois de ladite voiture.

10. Climatisation selon l'une quelconque des revendications 1 à 6, **caractérisée en ce que** ledit véhicule est un engin agricole, ou un engin de terrassement, ou un engin de levage ; ladite paroi étant la paroi arrière (8) de la cabine.
